# EUROPEAN PATENT APPLICATION

(11) **EP 1 759 659 A1**
(43) Date of publication of application: **07.03.2007**
(21) Application number: 06018285.4
(22) Date of filing: 01.09.2006
(51) Int. Cl.: A61C 9/00

(54) **Apparatus for producing dental impressions**

(30) Priority: 02.09.2005 DE 102005042013; 02.08.2006 EP 06016081
(71) Applicant: Neuschäfer, Gerd, 36251 Bad Hersfeld (DE)
(72) Inventor: Neuschäfer, Gerd, 36251 Bad Hersfeld (DE)

(57) **Abstract**

An apparatus serves to produce dental impressions for the subsequent manufacture of crowns, bridges and other dental prostheses. The apparatus serves to produce so called injection correction impressions of teeth contained in a jaw. The apparatus includes an injection correction impression tray having an interior for containing impression material. The tray includes a bottom opening. The apparatus further includes a bottom plate having a top side and a protrusion. The bottom plate is connectable to the tray in a way that the protrusion protrudes into the interior of the tray to form an injection channel for a correction impression material.

## Description

### FIELD OF THE INVENTION

The present invention generally relates to an apparatus for producing dental impressions. More particularly, the present invention relates to an apparatus for producing injection correction impressions of a jaw including teeth. The apparatus includes a tray having an interior to be filled with an impression material.

The impressions of the jaw including teeth are taken for the subsequent manufacture of crowns, bridges and other dental prostheses. The general technique described herein is the so called injection correction impression technique. This technique includes at least the steps of producing a first impression and of producing a second impression (the "correction" impression). In the first step, an impression is produced with a first high-viscosity impression material. In another step, a correction impression is produced. During this step, a low-viscosity correction impression material is used as a correction material to produce an impression of portions of the teeth which were not accessible during the first step. For this purpose, the correction impression material is injected into the interior of the tray and into the first impression located therein.

### BACKGROUND OF THE INVENTION

An apparatus for producing injection correction impressions of a jaw including teeth is generally known in the art. The apparatus includes a tray which has a bottom side and side surfaces forming a chamber for containing impression material. The tray including a high-viscosity impression material is introduced into the mouth of the patient, and the patient closes his mouth such that the teeth enter the impression material. In this way, a first impression is produced with the first high-viscosity impression material. After hardening of the impression material, the tray is removed from the mouth of the patient. Next, the hardened impression material is partly removed to produce an injection channel for a correction impression material to be used in a following step. The tray is then reintroduced into the mouth of the patient in the same position, and a low-viscosity correction impression material is injected into the injection channel and into portions within the tray which were not accessible during the first step using the high-viscosity impression material. The known apparatus and method conducted therewith may lead to defective impressions due to saliva, blood, air, turbulences and other anatomic influences such as the tongue, the cheek bands and so forth. Such defects may result in the necessity of having to repeat the production of the impression or to insufficient prosthetic results. Thus, the known method is time consuming, stressful, expensive and takes a lot of work.

An apparatus for producing injection correction impressions of a jaw containing teeth is known from US Patent No. US 6,398,550 B1 corresponding to ***German Gebrauchsmuster*** DE 200 10 403 U1 ***and*** DE 299 20 226 U1***.*** A similar apparatus is known from ***German Gebrauchsmuster*** DE 203 08 413 U1***.*** The know apparatus includes an injection correction impression tray having an interior for containing an impression material. The tray includes a closed bottom side into which an impression material is introduced. Furthermore, a casting channel mould can be inserted into the tray. The casting channel mould is removed after having produced the first impression, and the injection channel resulting therefrom is used for the following production of the correction impression.

Another apparatus for producing an injection correction impression of a jaw including teeth is known from ***German Gebrauchsmuster*** DE 201 05 176 U1***.*** The apparatus includes an injection correction impression tray having an interior for containing an impression material. The tray has a bottom opening. The apparatus further includes a bottom plate being designed and arranged to be connected to the tray to close the bottom opening. The bottom plate has a plain top side which faces the interior of the tray. After having produced the first impression, the bottom plate is removed from the tray to be capable of manually removing parts of the impression material to produce an injection channel for a correction impression mass to be later introduced through the injection channel.

Other apparatuses for producing impressions of a jaw including teeth are known from ***German Gebrauchsmuster*** DE 200 21 854 U1***,*** US Patent No. US 6,394,802 B1 ***and*** German Patent Application No. DE 196 08 546 A1***.***

### SUMMARY OF THE INVENTION

The present invention relates to an apparatus for producing dental impressions for the subsequent manufacture of crowns, bridges and other dental prostheses. The apparatus serves to produce injection correction impressions of teeth contained in a jaw. The apparatus includes an injection correction impression tray having an interior for containing impression material. The tray includes a bottom opening. The apparatus further includes a bottom plate having a top side and a protrusion. The bottom plate is connectable to the tray in a way that the protrusion protrudes into the interior of the tray to form an injection channel for a correction impression material.

With the novel apparatus, it is possible to effectively produce dental correction impressions with an apparatus which may be easily handled. The novel injection correction tray may be handled in a similar way as known trays which simplifies usage of the novel apparatus for the user. The novel apparatus does not require separate means or steps for producing an injection channel. The injection channel is produced by the protrusion being part of the bottom plate or being connected thereto.

The novel apparatus includes a tray and a bottom plate. A bottom opening having a shape approximately corresponding to the curve of the jaw is arranged in the body of the tray. In the distal tray bottom portion, the bottom opening is located at a sufficient distance with respect to the edge portion of the bottom of the tray to ensure torsional stability of the injection correction impression tray. The bottom of the tray includes a means for connection of the tray with the bottom plate to cover the bottom opening.

The bottom plate at its top side facing the bottom opening of the tray includes a protrusion being designed and arranged to protrude into the interior of the tray when the bottom plate is connected to the tray. In case the bottom plate is designed as a reversible bottom plate, meaning it can be connected to the tray in two different positions, its opposing bottom side is designed to be substantially plain. During production of the initial impression, the protrusion serves as a placeholder to form a free injection channel through which the correction impression material is later pressed into the tray during the second impression step, meaning the correction impression step. In other words, the protrusion (or the profile) of the bottom plate prevents initial impression material from entering this region. Generally, the shape of the protrusion approximately corresponds to the shape of the arc of the tray. Preferably, the protrusion has an inverted U-shaped or V-shaped cross section as seen when the top surface of the bottom place faces in an upward direction. It is also possible to realize the so called curve of Spee and the curve of Wilson in the design of the protrusion, and to design it to diminish in a way to reduce the required opening angle of the mouth.

The reversible bottom plate is designed and arranged to be capable of dosing the bottom opening in the bottom of the tray with its plain surface as well as with its top surface including the protrusion. For this purpose, it is rotated about 180° about its sagital axis. When the bottom plate closes the bottom of the tray with its protrusion, the protrusion protrudes into the interior of the tray. The height of the protrusion is chosen such that the occlusion surfaces and the cutting edges, respectively, of the lateral teeth and of the front teeth may contact the back of the protrusion during initial production of the impression.

There are a number of different possibilities of designing the protrusion. For example, the following designs are possible:
- the protrusion is only arranged at one side of the bottom plate (meaning the left side or the right side as corresponding to the left side and the right side of the jaw of the patient);
- the protrusion is designed to be shorter in the distal direction at one side;
- the protrusion is designed to be shorter in the distal direction at both sides;
- the protrusion is also designed to be enlarged in the mesial direction to contact the wall of the tray.

In case of the above mentioned first, second and third design example of the protrusion, the protrusion is connected to an injection opening. Preferably, the injection opening is located in the mesial portion of the bottom plate. The correction impression material is pressed into the injection channel through the injection opening.

The injection opening may be designed to be conical to improve introduction of correction impression material into the injection channel. In this way, introduction of correction impression material is simplified by an improved adaptation of an injection needle to be connected to the injection channel. When using outlet valves for producing negative pressure, this design of the injection openings results in the injection openings being closed in an air-sealed way.

Preferably, deaerating openings are located in the bottom plate. The deaerating openings allow for air, saliva, blood and surplus correction impression mass exiting the interior of the tray during production of the correction impression.

Preferably, the deaerating channels are associated with outlet valves. The outlet valves in combination with the deaerating channels serve to produce negative pressure in the region of the impression when the correction impression is taken. The outlet valves are connected to the deaerating channels at the outer surface of the bottom plate before taking a correction impression with a correction impression material having low viscosity. The outlet valves are designed to allow for passage of air in a direction from their valve foot being located above the deaerating channel towards their valve head being connected to a source of negative pressure. For example, the source of negative pressure may be the suction device of the dental treatment equipment used by the dentist. The outlet valves may have a certain range of control, or they may be designed to be freely controllable.

The bottom plate may be designed as a reversible bottom plate including a plain surface opposed to the surface including the protrusion. A variety of different embodiments of the reversible bottom plate is possible. For example, these include the following designs:
- the reversible bottom plate is designed to be located within the outer shape of the tray;
- the reversible bottom plate includes a handle which is designed to be located within the outer shape of the handle of the tray;
- the reversible bottom plate includes a handle, whereas the tray does not include a handle; the handle of the reversible bottom plate also fulfills the function of the handle of the tray.

The bottom plate and the protrusion may be designed as one piece, two pieces or a plurality of pieces. Various embodiments are possible. For example, these embodiments include the following configurations:
- the bottom plate and the protrusion are designed as one piece,
- in case of the protrusion and the bottom plate being designed as two separate pieces, the protrusion and the bottom plate are designed to be connectable in a detachable way, for example by a plug connection, magnets, and the like;
- in case of the protrusion and the bottom plate being designed as more than two pieces, the protrusion may be designed as a plurality of segments.

In this way, various configurations of the protrusion may be realized by changing the arrangement of the segments of the protrusion. For example, this includes configurations in which the segments of the protrusion are only located at the left side or at the right side of the bottom plate or to be shorter in the distal direction at one side or at both sides.

The bottom plate and the protrusion may be made of various materials. For example, they may be made of metal or plastic. In case the bottom plate and the protrusion are designed as a plurality of pieces, it is possible that the bottom plate and the protrusion are made of different material.

The impression tray may be used as a conventional impression tray after having completely removed the protrusion from the bottom plate.

To simplify introduction of correction impression mass into the interior of the injection correction impression tray, especially when using the tray for making an impression of the upper jaw, it makes sense to arrange the injection inlet in the mesial wall of the tray. Such an embodiment of the tray may also be called a frontal injection correction impression tray. The bottom opening is enlarged to extend to the mesial bottom of the tray and to the mesial wall of the tray such that it forms a frontal injection opening. In a corresponding way, the protrusion of the bottom plate is enlarged in a congruent way to the mesial wall of the tray. The mesial portion of the protrusion is designed such that it closes the opening of the mesial wall of the tray.

The bottom plate of the novel apparatus at one side includes the protrusion. As described before, in case the bottom plate is designed as a reversible bottom plate, the other side of the bottom plate is designed to be plain, and the bottom plate may also be connected to the tray in its rotated position. In another embodiment, the apparatus includes a second bottom plate having a plain surface which is used instead of a reverted bottom plate. The reverted bottom plate and the second bottom plate with its plain surface, respectively, are used to close the bottom opening of the tray during introduction of correction impression material into the injection channel.

The bottom plate may also be designed as a counter jaw impression bottom plate including a chamber for containing impression material for producing an impression of the counter jaw of the patient. In this way, it is possible to produce impressions of both jaws of the patient with one apparatus. For this purpose, the counter jaw bottom plate is designed such that it may be connected to the body of the tray in a reversible manner.

The protrusion located at a bottom surface of the counter jaw impression bottom plate has a shape, design and arrangement which are similar to the one of the protrusion of the frontal reversible bottom plate. The protrusion is designed to be detachable from the counter jaw bottom plate. It is possible to arrange deaerating channels at suitable locations. At the other side, the counter jaw impression bottom plate includes side walls which form a channel having the shape of an arc and serving to contain impression material for taking an impression of the counter jaw.

In its functional condition for simultaneously taking the first impression of the first jaw and of the counter jaw, the counter jaw impression bottom plate is connected with the body of the tray in a way that its protrusion protrudes into the interior of the tray. The channels of the frontal counter jaw impression bottom plate and the interior of the injection correction impression tray are filled with an impression material, they are introduced into the mouth of the patient and both jaws are moved into the impression materials until the impressions have hardened. After hardening of the impressions, the apparatus is removed from the mouth of the patient, the counter jaw impression bottom plate is removed from the body of the tray, the protrusion is removed, a connection between the injection channel and the area of preparation is realized and the counter jaw impression bottom plate is reconnected to the body of the tray. The surface of the counter jaw impression bottom plate not including a protrusion now forms the outer surface of the injection channel. The apparatus is then reintroduced into the mouth of the patient. The teeth and the jaw structures of both jaws are supported in the impressions, and they stabilize the position of the apparatus. In the following, the correction impression material having a comparatively low viscosity is introduced into the injection channel and into the portion where the correction impression is made via the injection opening. After hardening of the correction impression material, the impression within the body of the tray is filled to produce the correction impression model and the impression in the channel of the counter jaw impression bottom plate is filled to produce the counter jaw model.

The channel for containing impression material for the counter jaw and the counter jaw impression bottom plate may be designed as one piece or as a plurality of pieces. In the later case, the channel has an outer surface which is reversibly connectable to the plain surface of the bottom plate or to the tray.

To increase stability of the body of the tray, the tray may include one or more stiffening elements. The stiffening elements are designed to connect the inner side and the outer side of the bottom opening. They protrude into the interior of the tray through the bottom opening at a suitable location. Their design and arrangement corresponds to the cross section of the protrusion at this location. In this way, the stiffening elements also serve to support the protrusion.

Other features and advantages of the present invention will become apparent to one with skill in the art upon examination of the following drawings and the detailed description. It is intended that all such additional features and advantages be included herein within the scope of the present invention, as defined by the claims.

### BRIEF DESCRIPTION OF THE DRAWINGS

The invention can be better understood with reference to the following drawings. The components in the drawings are not necessarily to scale, emphasis instead being placed upon dearly illustrating the principles of the present invention. In the drawings, like reference numerals designate corresponding parts throughout the several views.
**Fig. 1** is a top view of a first exemplary embodiment of the injection correction impression tray of the novel apparatus.
**Fig. 2** is a top view of a first exemplary embodiment of the bottom plate of the novel apparatus.
**Fig. 3** is a cross sectional view of an exemplary embodiment of the novel apparatus in the mounted position of the tray of Fig. 1 and the bottom plate of Fig. 2.
**Fig. 4** is a top view of a second exemplary embodiment of the injection correction impression tray of the novel apparatus.
**Fig. 5** is a top view of a second exemplary embodiment of the bottom plate of the novel apparatus
**Fig. 6** is a side view of an exemplary embodiment of an outlet valve of the novel apparatus.

### DETAILED DESCRIPTION

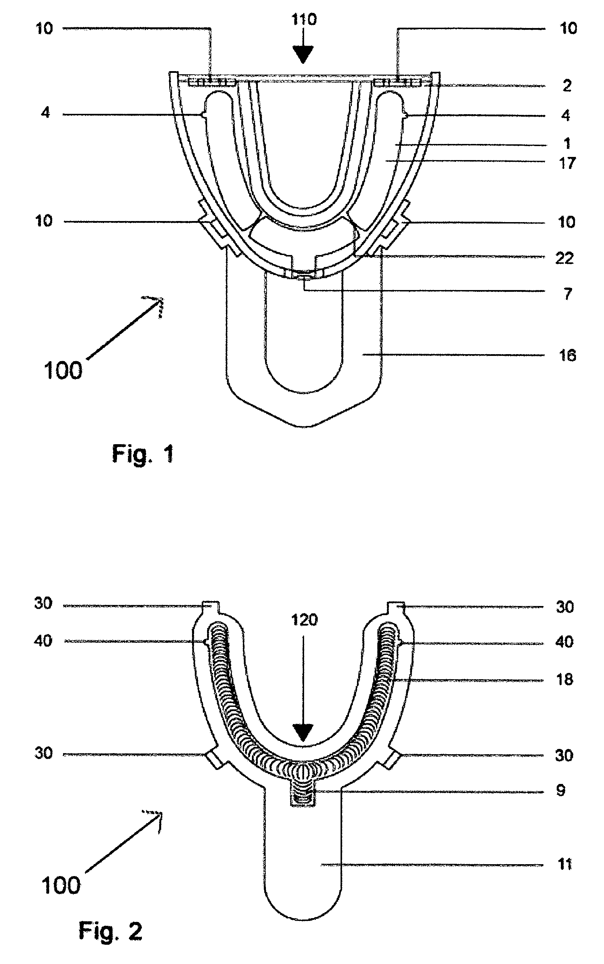

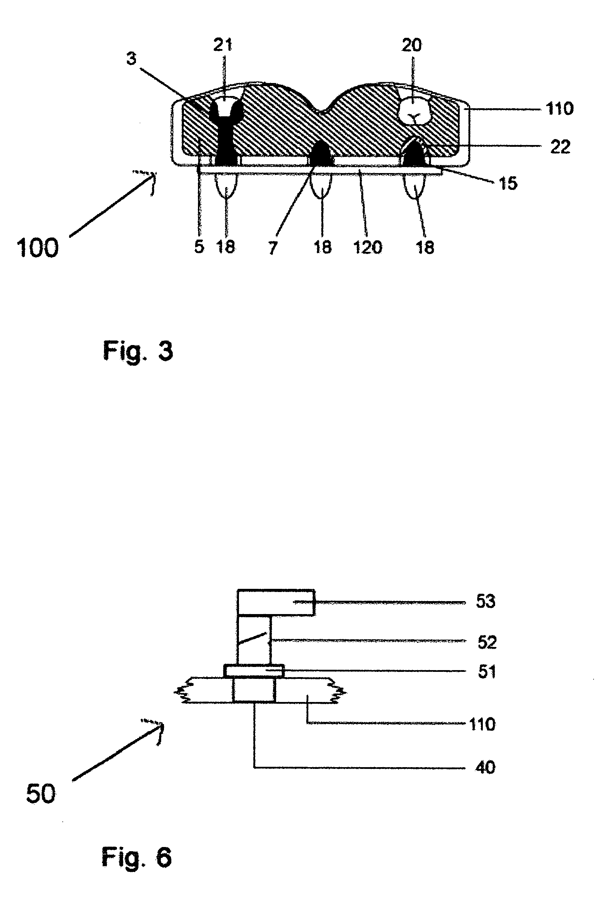

Referring now in greater detail to the drawings, **Figs. 1 to 3** illustrate a first exemplary embodiment of the novel apparatus 100 for producing dental impressions. The illustrated exemplary embodiment of the novel apparatus 100 is used for producing an impression of a tooth 21 being contained in the upper jaw of a patient. However, the apparatus 100 may also be used for taking impressions of the lower jaw or of both jaws. The apparatus 100 includes an injection correction impression tray 110 illustrated in Fig. 1 and a bottom plate 120 illustrated in Fig. 2. The mounted position of the bottom plate 120 at the injection correction impression tray 110 is illustrated in Fig. 3.

The injection correction impression tray 110 has a body 2 and a tray handle 16. The body 2 includes side walls and a bottom side which generally form the interior 17 of the injection correction impression tray 110 which serves to contain an impression material. Especially, the impression material is an initial impression material 5 which serves for taking the first dental impression. A bottom opening 1 is located in the region of the bottom side of the injection correction impression tray 110. The bottom opening 1 generally has a shape corresponding to the arc of the injection correction impression tray 110 and of the jaw of which an impression is to be made. In the illustrated exemplary embodiment, the bottom opening 1 includes three separate sections such that the material of the bottom surface of the tray 110 forms stiffening elements 22 extending between the side walls of the tray 110 to increase stability of the tray 110. However, the bottom opening 1 may also have various different designs. The tray 110 further includes connection elements 10 serving for connecting the bottom plate 120 to the tray 110. In the illustrated embodiment, the tray 110 is designed as a frontal injection correction impression tray 110. The tray 110 includes a frontal injection opening 7 serving for introduction of a correction impression material 3 into the interior 17 of the tray 110. The tray 110 also includes deaerating channels 4.

As it is especially to be seen in Fig. 2, the bottom plate 120 generally has a similar outer shape corresponding to the arc of the jaw as it has been described with respect to the tray 110. The bottom plate 120 may include a handle 11. However, it is also possible that the bottom plate 120 does not include a handle and/or that the tray 110 does not include the tray handle 16. The bottom plate 120 includes a protrusion 18. The protrusion 18 may be made as one piece or as a plurality of pieces with the remaining material of the bottom plate 120. The protrusion 18 is arranged at the top side of the bottom plate 120 such that it extends out off the plane of illustration of Fig. 2 in an upward direction. In the illustrated exemplary embodiment, the protrusion 18 includes a front portion 9. The bottom plate 120 further includes connection elements 30 serving for connecting to the connection elements 10 of the tray 110. The bottom plate 120 includes deaerating channels 40 cooperating with the deaerating channels 4 of the tray 110 as it will be described herein below.

In the first mounted position of the apparatus 100, the bottom plate 120 is connected to the injection correction impression tray 110 in a way that the protrusion 18 protrudes into the interior 17 of the injection correction impression tray 110 to form an injection channel 15 for a correction impression material 3 to be later introduced into the apparatus 100. In this first mounted position of the apparatus 100, the apparatus 100 being filled with the initial impression material 5 is introduced into the mouth of the patient. The teeth of the patient enter the impression material 5 in a way that the impression material 5 is dislocated in a region outside of the portion of which an impression is to be made such that the impression material 5 seals gaps between the body 2 of the injection correction impression tray 110 and the bottom plate 120. The impression material 5 then hardens, and the apparatus 100 is removed from the mouth of the patient. In the following, the tooth which is to be prepared for a crown, a bridge or other dental prostheses is grinded to attain the stumb of a tooth or the snag 21 illustrated in Fig. 3.

In the next step, the bottom plate 120 is removed from the injection correction impression tray 110. The impression material 5 located between the prepared tooth stumb 21 and the injection channel 15 is removed. In the illustrated exemplary embodiment, the bottom plate 120 is designed as a reversing bottom plate 19 which is rotated about 180° about its sagital axis to be reconnected to the tray 110 in the rotated position. However, it is also possible not to use a reversing bottom plate 19, but to instead connect a second bottom plate to the tray 110. Anyway, the bottom plate 120 now is located with respect to the tray 110 such that no protrusion faces the interior 17 of the tray 110. The bottom plate 120 faces the interior 17 of the tray 110 with its substantially plain surface which now forms the outer limit of the injection channel 15 which had been produced by the protrusion 18 in the first position of the bottom plate 120 at the tray 110. The injection opening 7 is now freely accessible for an introduction of correction impression material 3.

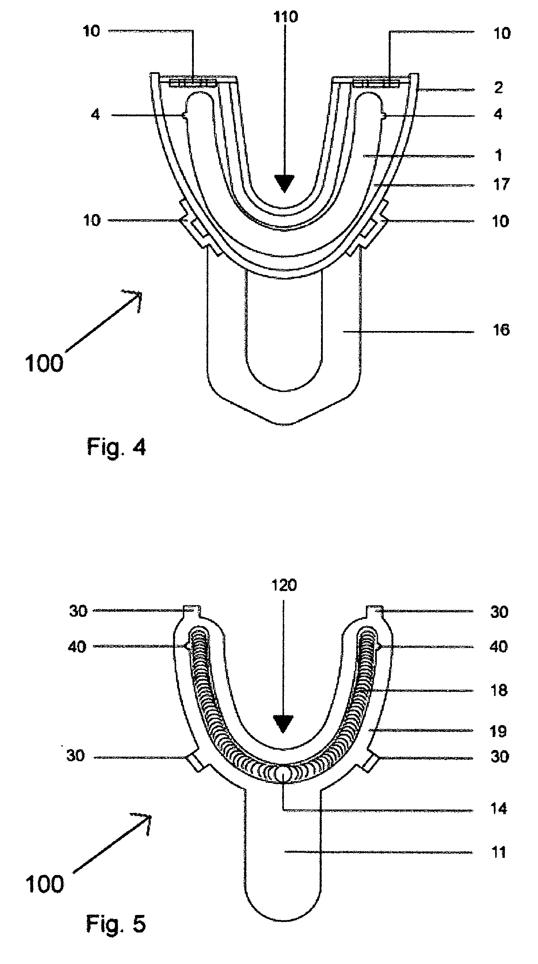

**Figs. 4 and 5** illustrate another exemplary embodiment of the novel apparatus 100. With respect to all common features, it is referred to the above description. In this case, the bottom opening 1 of the tray 110 is designed as a continuous channel. The bottom plate 120 is designed to be reversible and to include the injection opening 14.

**Fig. 6** illustrates an exemplary embodiment of an outlet valve 50 of the novel apparatus 100. Preferably, the outlet valve 50 is connected to the deaerating channels 40 being located at the bottom plate 120. The outlet valves 50 include a valve foot 51, a valve body 52 and a valve head 53. They are designed and arranged such that they allow for passage through the deaerating channels 4, 40 and the outlet valves 50 out off the apparatus 100. A source of negative pressure (the suction device of the dental equipment, for example) is connected to the valve head 53 of the outlet valves 50. The apparatus 100 is reintroduced into the mouth of the patient, and the teeth 20 and the jaw structures are supported in the impressions of the initial impression material 5 in a stabilized way. The edges of the initial impression form an airtight and humidity tight seal. An injection needle of an apparatus for applying correction impression material 3 is tightly connected to the injection opening 7 or 14. In this way, hollow spaces located within the initial impression are closed in an airtight way. The suction device produces negative pressure in the hollow spaces which results in correction impression material 3 delivered by the apparatus for supplying correction impression material 3 being sucked into the hollow spaces. The liquid correction impression material 3 flows through the injection channel 15, and it reaches the tooth stumb 21. It fills the hollow space between the complete shape of the tooth of the initial impression and the prepared tooth stumb 21, and it also flows into the sub-gingival preparation region. Remainders of air, blood, saliva and surplus impression material are removed from the apparatus 100 via the deaerating channels 4, 40 and the outlet valves 50 by further introducing correction impression mass 3 in a controlled way. After hardening of the correction impression material 3, the apparatus 100 is removed from the mouth of the patient, and the impression is used for casting a model for the manufacture of crowns, bridges and other dental prostheses as it is generally known in the art.

Many variations and modifications may be made to the preferred embodiments of the invention without departing substantially from the spirit and principles of the invention. All such modifications and variations are intended to be included herein within the scope of the present invention, as defined by the following claims.

## Claims

1. An apparatus for producing dental impressions, comprising:
an injection correction impression tray (110), said injection correction impression tray (110) having an interior (17) being designed and arranged to contain impression material (5), said injection correction impression tray (110) including a bottom opening (1); and
a bottom plate (120), said bottom plate (120) having a top side and a protrusion (18), said protrusion (18) being arranged at said top side, said bottom plate (120) being designed and arranged to be connectable to said injection correction impression tray (110) in a way that said protrusion (18) protrudes into the interior (17) of said injection correction impression tray (110) to form an injection channel (15) for a correction impression material (3).

2. The apparatus of claim 1, **characterized in that** said bottom plate (120) is designed as a reversing bottom plate (19), said reversing bottom plate (19) having a bottom side, said bottom side being arranged opposed to said top side and being designed to be substantially plain, said reversing bottom plate (19) being designed and arranged to be connectable to said injection correction impression tray (110) in a way to close said bottom opening (1) by said plain bottom side.

3. The apparatus of claim 1 or 2, **characterized in that** said protrusion (18) and said bottom plate (120) are designed as one piece.

4. The apparatus of claim 1 or 2, **characterized in that** said protrusion (18) and said bottom plate (120) are designed as separate elements and to be connectable and separable.

5. The apparatus of claim 1, **characterized in that** said protrusion (18) and said bottom plate (120) are designed as one piece and wherein said apparatus (100) further comprises a second bottom plate, said second bottom plate having a plain surface and being designed and arranged to be connectable to said injection correction impression tray (110) in a way to close said bottom opening (1) by said plain surface.

6. The apparatus of at least one of claims 1 to 5, **characterized in that** said bottom plate (120) includes an injection opening (7, 14), said injection opening (7, 14) being designed and arranged to introduce correction impression material (3) into the interior (17) of said injection correction impression tray (110).

7. The apparatus of claim 6, wherein said bottom plate (110) includes a plurality of deaerating channels (40), said deaerating channels (4) being designed and arranged to allow for air, saliva, blood and/or surplus correction impression mass (3) exiting the interior (17) of the tray (110) during production of the correction impression.

8. The apparatus of at least one of claims 1 to 7, **characterized in that** said injection correction impression tray (110) includes a tray handle (16) and/or said bottom plate (120) includes a handle (11).

9. The apparatus of at least one of claims 1 to 8, **characterized in that** said bottom plate (120) is designed as a counter jaw impression bottom plate, said counter jaw impression bottom plate having a bottom side facing away from said injection correction impression tray (110), said counter jaw impression bottom plate including a chamber being designed and arranged to contain impression material for producing an impression of a counter jaw, said chamber being arranged at said bottom side.

10. The apparatus of claim 9, wherein said counter jaw impression bottom plate and said chamber are designed as one piece, or as separate elements and to be connectable and separable.

11. The apparatus of at least one of claims 1 to 8, **characterized in that** said injection correction tray (110) has a body (2) and includes a fixing device (10), said fixing device (10) being designed and arranged to fixedly connect said bottom plate (120) to said body (2).

12. The apparatus of at least one of claims 1 to 11, **characterized in that** said injection correction impression tray (110) is designed as a frontal injection correction impression tray, said frontal injection correction impression tray including a mesial frontal injection opening (7) being connected to said bottom opening (1).

13. The apparatus of at least one of claims 1 to 12, further **characterized by** at least one stiffening element (22), said stiffening element (22) being designed and arranged to connect an inner side and an outer side of said bottom opening (1).

14. The apparatus of at least one of claims 7 to 12, further **characterized by** a plurality of outlet valves (50), said outlet valves (50) being designed and arranged to be connectable to said deaerating channels (40) and to a source of negative pressure for producing negative pressure in the interior (17) of said injection correction impression tray (110), the negative pressure resulting in correction impression material (3) being sucked into the interior (17) of said injection correction impression tray (110) through said injection opening (7, 14).
